(19) **Europäisches Patentamt / European Patent Office / Office européen des brevets**

(11) **EP 2 577 014 B1**

(12) **EUROPEAN PATENT SPECIFICATION**

(45) Date of publication and mention
of the grant of the patent:
**01.11.2017 Bulletin 2017/44**

(21) Application number: **11786987.5**

(22) Date of filing: **11.05.2011**

(51) Int Cl.:
*F01N 11/00* *(2006.01)*  *F01N 3/025* *(2006.01)*
*F01N 3/035* *(2006.01)*  *F01N 3/10* *(2006.01)*
*F02D 41/22* *(2006.01)*  *F02D 41/14* *(2006.01)*
*F02D 41/24* *(2006.01)*  *F02D 41/02* *(2006.01)*

(86) International application number:
**PCT/SE2011/050596**

(87) International publication number:
**WO 2011/149411 (01.12.2011 Gazette 2011/48)**

(54) **METHOD AND SYSTEM FOR ADAPTATION OF A GAS SENSOR**

VERFAHREN UND SYSTEM ZUR ANPASSUNG EINES GASSENSORS

PROCÉDÉ ET SYSTÈME D'ADAPTATION D'UN CAPTEUR DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2010 SE 1050534**

(43) Date of publication of application:
**10.04.2013 Bulletin 2013/15**

(73) Proprietor: **Scania CV AB (publ)
151 87 Södertälje (SE)**

(72) Inventor: **STENLÅÅS, Ola
S-151 48 Södertälje (SE)**

(74) Representative: **Scania CV AB
Patents, GP 117kv
151 87 Södertälje (SE)**

(56) References cited:
**EP-A2- 1 365 234**      **EP-A2- 1 365 234**
**WO-A1-2004/109072**    **WO-A1-2007/073324**
**DE-A1-102007 045 080**  **FR-A1- 2 844 880**
**US-A- 5 291 673**       **US-A1- 2005 005 690**
**US-A1- 2007 010 932**

**Description**

FIELD OF THE INVENTION AND PRIOR ART

The present invention relates to a method and a system for adaptation of a gas sensor which is situated in an exhaust line from a combustion engine and generates a measurement signal which depends on the concentration of a specific gas in the exhaust gases passing through the exhaust line and is converted by means of a signal processing algorithm to a value which represents the concentration of said gas in the exhaust gases. The invention relates also to a computer programme product comprising computer programme code for implementing a method according to the invention, and to an electronic control unit.

To be able to control a combustion engine and various kinds of exhaust post-treatment devices in an effective and environmentally friendly way, it may be important to be able to measure with good accuracy the concentration of certain gases in the exhaust gases which pass through the engine's exhaust line. This may for example be done by means of a gas sensor of the kind indicated above. Such a sensor may for example be configured to measure the concentration of $NO_x$, $O_2$, $NH_3$ or CO in the exhaust gases. A problem with a conventional gas sensor is that it is sensitive to ageing, which means that the measurement signal generated by it drifts over time. Compensating for this drift entails regular corrections of the signal processing algorithm used for converting the sensor's measurement signal to a value which represents the concentration of the relevant gas in the exhaust gases so that this concentration value is caused to correspond better to the actual concentration of the relevant gas in the exhaust gases. In this description and the claims set out below, the term used for such correction is adaptation. The adaptation of a gas sensor in an exhaust line from a combustion engine may be effected by comparing a measured value determined by the sensor for the concentration of a gas in the exhaust gases with a given gas concentration at a predetermined engine operating point.

An example of a known adaptation of a gas sensor is shown for example in DE 10 2007 045 080 A1. problem with this known adaptation method is that the given gas concentration is liable to errors which result in poor accuracy in the adaptation of the sensor. It is difficult in particular to identify an engine operating point which always results in a given and stable concentration of the gas measured by the sensor.

OBJECT OF THE INVENTION

The object of the present invention is to propose a novel and advantageous way of adapting a gas sensor which is intended to measure the concentration of a gas in the exhaust gases from a combustion engine.

SUMMARY OF THE INVENTION

According to the present invention, said object is achieved by a method having the features defined in claim 1 and a system having the features defined in claim 6.

According to the invention, sets of measured values are recorded at three or more different times during a period when the operating conditions of the engine are such that the composition of the exhaust gases released by it is maintained substantially unchanged, and each set of measured values comprises a first value corresponding to the magnitude of the sensor's measurement signal at the respective time, and a second measured value corresponding to the temperature at the respective time of the exhaust gases in the portion of the exhaust line where the gas sensor is situated. The temperature of the exhaust gases is regulated in such a way that their temperature in the portion of the exhaust line where the gas sensor is situated is different at the time of each recording during the relevant period. The values in said sets of measured values and relationships between them indicated by the general gas law serve as a basis for determining a value for one or more constants which form part of the signal processing algorithm used for converting the sensor's measurement signal to a value which represents the concentration of a specific gas in the exhaust gases. The sensor is thereafter adapted by adjustment of the signal processing algorithm according to the value determined for each constant.

As mentioned above, it is difficult to identify an engine operating point which always results in a given and stable concentration of the gas measured by a sensor in an exhaust line from a combustion engine. It is nevertheless relatively easy to identify an engine operating point which results in exhaust gases with a composition which is stable, i.e. not changing substantially over time, but is unknown. According to the general gas law, the concentration, but not the composition, of an ideal gas changes when its temperature changes while its pressure and volume are kept constant. Altering the temperature of the exhaust gases in the portion of the exhaust line where the gas sensor is situated while the exhaust pressure is kept constant thus makes it possible to effect a change in the total concentration of the exhaust gases in that portion of the exhaust line without affecting their composition, with the consequence that the gas concentration detected by the sensor changes when such a temperature change occurs. This fact and relationships which arise from the general gas law make it possible according to the invention to effect with good accuracy an adaptation of the sensor here concerned.

According to an embodiment of the invention, said temperature regulation is effected by different amounts of unburnt fuel being caused to accompany the exhaust gases to a fuel oxidation device situated in the exhaust line upstream of the gas sensor, in order to be oxidised in the fuel oxidation device and thereby generate an increase in the temperature of the exhaust gases passing through the fuel oxidation device. This is a simple way of achieving the desired change in the temperature of the exhaust gases.

Other advantageous features of the method and the system according to the invention are indicated by the independent claims and the description set out below.

The invention relates also to a computer programme product having the features defined in claim 9 and an electronic control unit having the features defined in claim 11.

BRIEF DESCRIPTION OF THE DRAWINGS

The invention is described in more detail below on the basis of embodiment examples with reference to the attached drawings, in which:

Fig. 1    is a schematic diagram of a combustion engine with associated exhaust line,

Fig. 2    is a schematic diagram of an electronic control unit for implementing a method according to the invention, and

Fig. 3    is a flowchart illustrating a method according to an embodiment of the invention.

DETAILED DESCRIPTION OF EMBODIMENTS OF THE INVENTION

The invention is described below with reference to a motor vehicle. The invention is nevertheless not confined to that context but may also be relevant in all contexts where a gas sensor is intended to measure the concentration of a specific gas in the exhaust gases from a combustion engine, e.g. in a watercraft or at a power station.

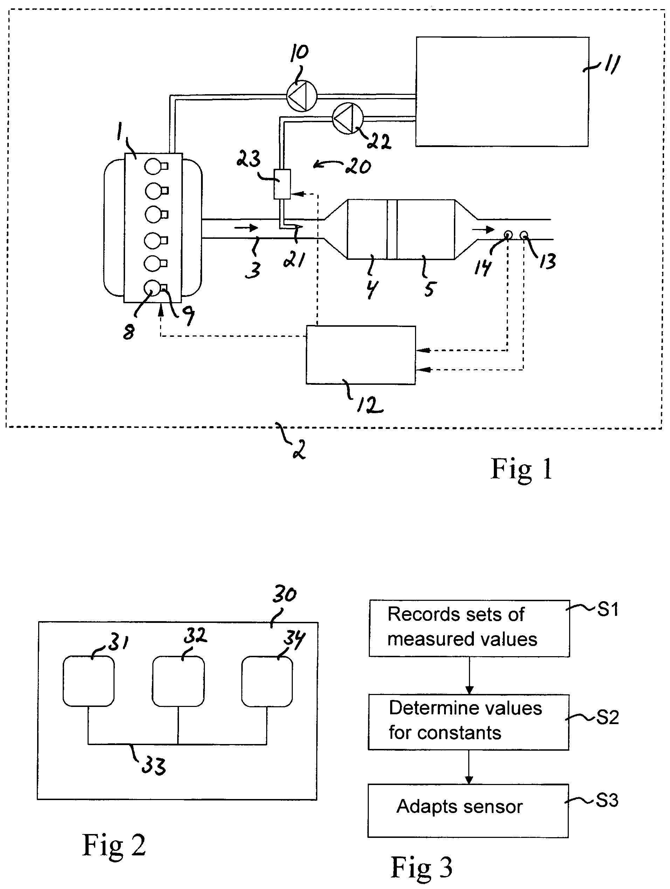

Fig. 1 depicts schematically a combustion engine 1 of a motor vehicle 2. The exhaust gases leaving the engine 1 move through an exhaust line 3 and pass out into the surroundings via an exhaust outlet. In the exhaust line 3, a fuel oxidation device 4 and a particle filter 5 are placed in series with one another, the particle filter being situated downstream of the fuel oxidation device. Fig. 1 illustrates schematically a combustion engine 1 with six cylinders, but it may have any desired suitable number of cylinders. Each cylinder 8 of the engine has associated with it an injector 9 of its own via which fuel is injected into the cylinder. A pump 10 is provided to feed fuel at high pressure to the injectors 9 from a fuel tank 11. A so-called common rail (not depicted) which serves as an accumulator to accumulate highpressure fuel which is to be fed to the injectors 9 may in a conventional way be situated between the pump 10 and the injectors. An electronic control device 12 determines the amount of fuel to be injected by the injectors 9 at each working stroke, depending on the vehicle's prevailing operating conditions, and regulates the opening time of the respective injector 9, i.e. the duration of the period during which the injector is kept open in order to inject fuel into the respective cylinder for the purposes of an individual working stroke, depending on the fuel injection amount determined.

In the embodiment illustrated in Fig. 1 and described below, the fuel oxidation device 4 takes the form of an oxidation catalyst. The fuel oxidation device might alternatively take the form of a set of two or more oxidation catalysts connected in series and/or in parallel, or be composed of one or more fuel oxidising units of some other type.

In the embodiments illustrated, a location for injection of fuel into the exhaust line 3 is situated upstream of the oxidation catalyst 4. Fuel injection is effected here via an injection device 20 comprising an injection means 21 in the form of an injection nozzle situated in the exhaust line. A pump 22 is provided to feed fuel to the injection means 21 from a fuel tank 11 of the vehicle. In the example illustrated in Fig. 1, the injection means 21 and the engine's cylinders 8 are arranged to be fed with the same fuel from a shared fuel tank 11, but they might alternatively each be arranged to be fed with the same kind or different kinds of fuel from respective fuel tanks. The supply of fuel to said injection means 21 is regulated by means of a regulating valve 23 situated between the fuel tank 11 and the injection means 21. The regulating valve 23 is controlled by the electronic control device 12. This control device 12 uses the regulating valve 23 to regulate the amount of fuel injected into the exhaust gases. When the particle filter 5 needs regenerating, i.e. needs to be freed of particles trapped in it, fuel is injected into the exhaust gases. This fuel accompanies the exhaust gases into the oxidation catalyst 4, in which it is oxidised while generating such an increase in the temperature of the exhaust gases that combustion of the particles trapped in the particle filter 5 takes place, thereby regenerating the particle filter.

A reduction catalyst, e.g. of SCR (selective catalytic reduction) type, might be provided in the exhaust line 3 downstream of the particle filter 5 or upstream of the injection means 21 to effect catalytic conversion of environmentally hazardous constituents of the exhaust gases to environmentally less hazardous substances.

A gas sensor 13 is provided in the exhaust line 3 downstream of the fuel oxidation device 4 to measure the concentration of a specific gas in the exhaust gases which flow through the exhaust line. This sensor 13 may for example be configured to measure the concentration of NO, $NO_2$, $N_2O$, $O_2$, $NH_3$ or CO in the exhaust gases.

The gas sensor 13 is provided with measuring means of a conventional type for generating a measurement signal S which depends on the concentration of a specific gas, e.g. NO, $NO_2$, $N_2O$, $O_2$, $NH_3$ or CO in the exhaust gases which pass through the portion of the exhaust line where the sensor is situated. The electronic control device 12 is connected to the sensor's measuring means in order to receive said measurement signal from it. The control device 12 is arranged to use a signal processing algorithm to convert the measurement signal received to a value which represents the concentration of the relevant gas in the exhaust gases.

A temperature sensor 14 is provided to measure the temperature T of the exhaust gases in the portion of the exhaust line 3 where the gas sensor 13 is situated. The control device 12 is connected to this temperature sensor 14 in order to receive measured values from it concerning the prevailing exhaust temperature at the gas sensor 13. In the embodiment illustrated, the temperature sensor 14 is freestanding from the gas sensor 13. The temperature sensor might alternatively be integrated in the gas sensor 13.

The control device 12 is arranged to record sets of measured values at three or more different times during a period when the operating conditions of the engine 1 are such that the composition of the exhaust gases leaving it is maintained substantially unchanged. These may be given operating conditions which have already been found to result in stable exhaust gas composition. Alternatively, the control device 12 might be arranged to determine when operating conditions which result in stable exhaust gas composition occur, by analysis of measured values from one or more gas sensors situated in the exhaust line 3.

Each of said sets of measured values comprises a first value $S_i$ corresponding to the magnitude of the measurement signal of the gas sensor 13 at the time of the respective recording, and a second value $T_i$ corresponding to the temperature, measured by the temperature sensor 14, of the exhaust gases at the gas sensor 13 at the time of the respective recording.

For the purposes of recording these sets of measured values, the control device 12 is arranged to regulate the temperature of the exhaust gases in such a way that their temperature in the portion of the exhaust line where the gas sensor 13 is situated is different at the time of each recording during the relevant period.

In the embodiment depicted in Fig. 1, the control device 12 is arranged to regulate the temperature of the exhaust gases by controlling the amount of unburnt fuel which is caused to accompany the exhaust gases to the oxidation catalyst 4 situated in the exhaust line upstream of the gas sensor 13, in order to be oxidised in the oxidation catalyst 4 and thereby generate an increase in the temperature of the exhaust gases passing through the oxidation catalyst 4. According to a first alternative, this fuel is injected into the engine 1 in the form of late post-injections in one or more of the engine's cylinders 8 via the injector 9 of each cylinder. These post-injections are effected so late during the respective working stroke that no combustion of the fuel thereby injected takes place in the cylinder/cylinders 8, with the result that this fuel will pass out from the engine 1 and accompany the exhaust gases to the oxidation catalyst 4. According to a second alternative, the respective fuel is injected into the exhaust line 3 via the aforesaid injection device 20, i.e. via the injection means 21. According to a further alternative, part of the respective fuel is injected in the form of late post-injections in the engine 1, while the remainder is injected via the injection means 21. The amount of fuel which needs to be injected to achieve the desired change in the temperature of the exhaust gases at the time of recording said sets of measured values is normally so small relative to the amount of exhaust gases that its influence on the exhaust composition may be disregarded when applying the adaptation method according to the invention.

The control device 12 is arranged to determine a value for one or more constants which form part of the aforesaid signal processing algorithm, on the basis of the values $S_i$, $T_i$ in said sets of measured values and in the light of relationships between these values which arise from the general gas law. The control device 12 is thereafter arranged to adapt the gas sensor 13 by adjusting the signal processing algorithm according to the value determined for each constant.

According to the general gas law,

$$P \cdot V = n \cdot R \cdot T \qquad (1)$$

in which P is the pressure of the gas in N m$^{-2}$, V the volume of the gas in m$^3$, n the substance amount of the gas in mol, R the general gas constant (8.3145 J mol$^{-1}$ K$^{-1}$) and T the temperature of the gas in kelvin.

From the general gas law it follows that

$$\frac{n}{V} = \frac{P}{R \cdot T} \qquad (2)$$

The total concentration $C_{Tot}$ of an amount of exhaust gases is given by the formula

$$C_{Tot} = \frac{n}{V} \qquad\qquad (3)$$

in which n is the total substance amount of the amount of exhaust gases and V is the volume of the amount of exhaust gases.

From equations (2) and (3) it follows that

$$C_{Tot} = \frac{P}{R \cdot T} \qquad\qquad (4)$$

The relationship between the concentration $C_A$ measured by the gas sensor 13 and the aforesaid total concentration $C_{Tot}$ is

$$C_A = X_A \cdot C_{Tot} \qquad\qquad (5)$$

in which $X_A$ is the mole fraction for the specific gas whose concentration the gas sensor 13 is arranged to measure.

From equations (4) and (5) it follows that

$$C_A = \frac{X_A \cdot P}{R \cdot T} \qquad\qquad (6)$$

If the temperature T of the exhaust gases in the portion of the exhaust line in which the gas sensor 13 is situated changes while the pressure P and the composition of the exhaust gases, and hence the mole fraction $X_A$, remain unchanged, the equation (6) results in the relationship

$$\frac{C_{A1}}{C_{A2}} = \frac{T_2}{T_1} \qquad\qquad (7)$$

in which $C_{A1}$ is the concentration of the relevant gas at the temperature $T_1$, and $C_{A2}$ is the concentration of the relevant gas at the temperature $T_2$.

An embodiment of the adaptation method according to the invention is described below in more detail with reference to a case where the aforesaid signal processing algorithm is an algorithm for linear matching, i.e. an algorithm of the appearance:

$$S \cdot K + L = C_A \qquad\qquad (8)$$

in which S is the measurement signal from the gas sensor 13, K a constant in the form of a so-called amplification factor, L a constant in the form of a so-called offset and $C_A$ the concentration of the relevant gas.

In this case, sets of measured values are recorded at three different times during a period when the operating conditions of the engine 1 are such that the composition of the exhaust gases released by the engine is maintained substantially unchanged. The values $S_1$, $T_1$ in the first set of measured values represent the gas sensor's measurement signal and the temperature of the exhaust gases at the gas sensor 13 at the time of the first recording, and the values $S_2$, $T_2$ in the second set of measured values and $S_3$, $T_3$ in the third set of measured values represent corresponding measurement signals and temperatures at the respective times of the second and third recordings.

The following equation system is arrived at on the basis of equations (7) and (8) and the three sets of measured values:

$$\begin{cases} (S_1 - S_2) \cdot K = C_{A1} - C_{A2} \\ (S_2 - S_3) \cdot K = C_{A2} - C_{A3} \\ \dfrac{C_{A1}}{C_{A2}} = \dfrac{T_2}{T_1} \\ \dfrac{C_{A2}}{C_{A3}} = \dfrac{T_3}{T_2} \end{cases} \qquad (9)\text{-}(12)$$

This equation system (9)-(12) has four unknowns K, $C_{A1}$, $C_{A2}$ and $C_{A3}$ and comprises four equations, which means that the amplification factor K can be resolved. This equation system can therefore be used to determine a value for the signal processing algorithm's amplification factor K. The gas sensor 13 can then be adapted by causing the algorithm's amplification factor K to assume the value thus determined. If the gas sensor 13 is zero-point adapted, the algorithm's aforesaid offset L is also known.

In cases where the signal processing algorithm is an algorithm for non-linear or multi-linear matching, more sets of measured values are required and the equation system becomes more extensive.

The control device 12 may comprise a single electronic control unit as illustrated in Fig. 1, or two or more mutually cooperating electronic control units.

Fig. 3 is a flowchart illustrating an embodiment of a method according to the present invention for adaptation of a gas sensor 13 of the type indicated above which is situated in an exhaust line 3 from a combustion engine 1.

As a first step S1, sets of measured values are recorded at three or more different times during a period when the operating conditions of the engine 1 are such that the composition of the exhaust gases released by it is maintained substantially unchanged, each of which sets of measured values comprises a first value $S_1$ corresponding to the magnitude of the gas sensor's measurement signal at the time of the respective recording, and a second value $T_1$ corresponding to the temperature at the time of the respective recording of the exhaust gases in the portion of the exhaust line where the gas sensor 13 is situated, i.e. the temperature measured by the temperature sensor 14. During that period, the temperature of the exhaust gases is regulated in such a way that their temperature in the portion of the exhaust line where the gas sensor 13 is situated is different at the time of each recording.

As a second step S2, on the basis of the values $S_i$, $T_i$ in said sets of measured values and in the light of relationships between these values which arises from the general gas law, a value is determined for one or more constants which form part of the signal processing algorithm used for converting the gas sensor's measurement signal S to a value which represents the concentration of a specific gas in the exhaust gases.

As a third step S3, the gas sensor 13 is adapted by adjustment of the signal processing algorithm according to the value determined for each constant.

Computer programme code for implementing a method according to the invention is with advantage included in a computer programme which can be read into the internal memory of a computer, e.g. the internal memory of an electronic control unit of a motor vehicle. Such a computer programme is with advantage provided via a computer programme product comprising a data storage medium which can be read by an electronic control unit and has the computer programme stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

A computer programme according to an embodiment of the invention comprises computer programme code for causing an electronic control device 12:

- to record sets of measured values at three or more different times during a period when the operating conditions of the engine 1 are such that the composition of the exhaust gases released by it is maintained substantially unchanged, each of which sets of measured values comprises a first value $S_1$ corresponding to the magnitude of the gas sensor's measurement signal at the time of the respective recording, and a second value $T_1$ corresponding to the temperature of the exhaust gases at the time of the respective recording in the portion of the exhaust line where the gas sensor 13 is situated,

- to regulate the temperature of the exhaust gases in such a way that the temperature of the exhaust gases in the portion of the exhaust line where the gas sensor 13 is situated is different at the time of each recording during the relevant period,

- to determine, on the basis of the values $S_i$, $T_i$ in said sets of measured values and in the light of relationships between these values which arise from the general gas law, a value for one or more constants which form part of the signal processing algorithm used for converting the gas sensor's measurement signal S to a value which represents the concentration of a specific gas in the exhaust gases, and

- to adapt the gas sensor 13 by adjustment of the signal processing algorithm according to the value determined for each constant.

Fig. 2 illustrates very schematically an electronic control unit 30 comprising an execution means 31, e.g. a central processor unit (CPU), for execution of computer software. The execution means 31 communicates with a memory 32, e.g. of the RAM type, via a data bus 33. The control unit 30 comprises also a data storage medium 34 e.g. in the form of a flash memory or a memory of the ROM, PROM, EPROM or EEPROM type. The execution means 31 communicates with the data storage medium 34 via the data bus 33. A computer programme comprising computer programme code for implementing a method according to the invention, e.g. in accordance with the embodiment illustrated in Fig. 3, is stored on the data storage medium 34.

## Claims

1. A method for adaptation of a gas sensor (13) which is situated in an exhaust line (3) from a combustion engine (1) and generates a measurement signal which depends on the concentration of a specific gas in the exhaust gases passing through the exhaust line and is converted by means of a signal processing algorithm to a value which represents the concentration of said gas in the exhaust gases,

   **characterised**

   - **in that** sets of measured values are recorded at three or more different times during a period when the operating conditions of the engine (1) are such that the composition of the exhaust gases released by it is maintained substantially unchanged, each of which sets of measured values comprises a first value ($S_1$) corresponding to the magnitude of said measurement signal at the time of the respective recording, and a second value ($T_1$) corresponding to the temperature of the exhaust gases at the time of the respective recording in the portion of the exhaust line where the gas sensor (13) is situated,
   - that the temperature of the exhaust gases is regulated in such a way that their temperature in the portion of the exhaust line where the gas sensor (13) is situated is different at the time of each recording during the relevant period,
   - that a value for one or more constants which form part of the signal processing algorithm is determined on the basis of the values ($S_i$, $T_i$) in said sets of measured values and in the light of relationships between these values which arise from the general gas law, and
   - that the gas sensor (13) is adapted by adjustment of the signal processing algorithm according to the value determined for each constant.

2. A method according to claim 1, **characterised in that** said temperature regulation is effected by different amounts of unburnt fuel being caused to accompany the exhaust gases to a fuel oxidation device (4) situated in the exhaust line upstream of the gas sensor (13), in order to be oxidised in the fuel oxidation device and thereby generate an increase in the temperature of the exhaust gases passing through the fuel oxidation device.

3. A method according to claim 2 **characterised in that** the fuel oxidation device (4) takes the form of an oxidation catalyst.

4. A method according to any one of claims 1-3, in which the signal processing algorithm is an algorithm for linear matching which has an amplification factor (K), **characterised**

   - **in that** a value for said amplification factor (K) is determined on the basis of the values ($S_i$, $T_i$) in said sets of measured values and in the light of relationships between these values which arise from the general gas law,
   - and that the gas sensor (13) is adapted by the signal processing algorithm's amplification factor (K) being caused to assume said value determined.

5. A method according to any one of claims 1-4, **characterised in that** the gas sensor (13) is a sensor which measures the concentration of NO, $NO_2$, $N_2O$, $O_2$, $NH_3$ or CO.

6. A system for adaptation of a gas sensor (13) which is situated in an exhaust line (3) from a combustion engine (1) and generates a measurement signal which depends on the concentration of a specific gas in the exhaust gases passing through the exhaust line and is converted by means of a signal processing algorithm to a value which represents the concentration of said gas in the exhaust gases,
**characterised** **in that** the system comprises an electronic control device (12) which is arranged:

- to record sets of measured values at three or more different times during a period when the operating conditions of the engine (1) are such that the composition of the exhaust gases released by it is maintained substantially unchanged, each of which sets of measured values comprises a first value ($S_1$) corresponding to the magnitude of said measurement signal at the time of the respective recording, and a second value ($T_1$) corresponding to the temperature at the time of the respective recording of the exhaust gases in the portion of the exhaust line where the gas sensor (13) is situated,
- to regulate the temperature of the exhaust gases in such a way that their temperature in the portion of the exhaust line where the gas sensor (13) is situated is different at the time of each recording during the relevant period,
- to determine a value for one or more constants which form part of the signal processing algorithm, on the basis of the values ($S_i$, $T_i$) in said sets of measured values and in the light of relationships between these values which arise from the general gas law, and
- to adapt the gas sensor (13) by adjustment of the signal processing algorithm according to the value determined for each constant.

7. A system according to claim 6, **characterised in that** the control device (12) is arranged to regulate the temperature of the exhaust gases by controlling the amount of unburnt fuel which is caused to accompany the exhaust gases to a fuel oxidation device (4) situated in the exhaust line upstream of the gas sensor (13), in order to be oxidised in the fuel oxidation device and thereby generate an increase in the temperature of the exhaust gases passing through the fuel oxidation device.

8. A system according to claim 6 or 7, in which the signal processing algorithm is an algorithm for linear matching which has an amplification factor (K), **characterised**

- **in that** the control device (12) is arranged to determine a value for said amplification factor (K) on the basis of the values ($S_i$, $T_i$) in said sets of measured values and in the light of relationships between these values which arise from the general gas law,
- and that the control device (12) is arranged to adapt the gas sensor (13) by the signal processing algorithm's amplification factor (K) being caused to assume said value determined.

9. A computer programme product for adaptation of a gas sensor (13) which is situated in an exhaust line (3) from a combustion engine (1) and generates a measurement signal which depends on the concentration of a specific gas in the exhaust gases passing through the exhaust line and is converted by means of a signal processing algorithm to a value which represents the concentration of said gas in the exhaust gases, which computer programme product comprises computer programme code for causing an electronic control device (12):

- to record sets of measured values at three or more different times during a period when the operating conditions of the engine (1) are such that the composition of the exhaust gases released by it is maintained substantially unchanged, each of which sets of measured values comprises a first value ($S_1$) corresponding to the magnitude of said measurement signal at the time of the respective recording, and a second value ($T_1$) corresponding to the temperature at the time of the respective recording of the exhaust gases in the portion of the exhaust line where the gas sensor (13) is situated,
- to regulate the temperature of the exhaust gases in such a way that their temperature in the portion of the exhaust line where the gas sensor (13) is situated is different at the time of each recording during the relevant period,
- to determine a value for one or more constants which form part of the signal processing algorithm, on the basis of the values ($S_i$, $T_i$) in said sets of measured values and in the light of relationships between these values which arise from the general gas law, and
- to adapt the gas sensor (13) by adjustment of the signal processing algorithm according to the value determined for each constant.

10. A computer programme product according to claim 9, **characterised in that** the computer programme product comprises a data storage medium which can be read by an electronic control unit and which has said computer programme code stored on it.

**11.** An electronic control unit for a motor vehicle, comprising an execution means (31), a memory (32) connected to the execution means, and a data storage medium (34) which is connected to the execution means and has the computer programme code of a computer programme product according to claim 9 stored on it.

**Patentansprüche**

**1.** Verfahren zur Anpassung eines Gassensors (13), der in einer Abgasleitung (3) eines Verbrennungsmotors (1) angeordnet ist und der ein Messsignal erzeugt, das von einer Konzentration eines bestimmten Gases in den durch die Abgasleitung tretenden Gasen abhängt und mittels eines Signalverarbeitungs-Algorithmus in einen Wert umgewandelt wird, der die Konzentration des Gases in den Abgasen darstellt, **dadurch gekennzeichnet, dass** Sätze von gemessenen Werten zu drei oder mehr unterschiedlichen Zeitpunkten während eines Zeitraums, während dessen die Betriebszustände des Motors derart sind, dass die Zusammensetzung der von dem Motor (1) abgegebenen Abgase zumindest im Wesentlichen unverändert beibehalten werden, aufgenommen werden, wobei jeder Satz von gemessenen Werten einen ersten Wert ($S_1$), der einer Größe des Messsignals zu dem Zeitpunkt der entsprechenden Aufnahme entspricht, und einen zweiten Wert (T1), der einer Temperatur der Abgase zu dem Zeitpunkt der entsprechenden Aufnahme in dem Teil der Abgasleitung entspricht, in welchem der Gassensor (13) angeordnet ist, umfasst,

- **dass** die Temperatur der Abgase derart geregelt ist, dass deren Temperatur in dem Teil der Abgasleitung, in welchem der Gassensor (13) angeordnet ist, zu dem Zeitpunkt jeder Aufnahme während des relevanten Zeitraums verschieden ist,
- **dass** ein Wert einer oder mehrerer Konstanten, die einen Bestandteil des Signalverarbeitungs-Algorithmus darstellen, auf der Grundlage der Werte ($S_i$, $T_i$) in den Sätzen gemessener Werte und gemäß Beziehungen dieser Werte, die sich aus den allgemeinen Gasgesetzen ergeben, bestimmt wird, und
- **dass** der Gassensor (13) durch Abstimmung des Signalverarbeitungs-Algorithmus gemäß des für jede Konstante bestimmten Werts angepasst wird.

**2.** Verfahren nach Anspruch 1, **dadurch gekennzeichnet, dass** die Temperaturregelung umgesetzt dadurch wird, dass verschiedene Mengen unverbrannten Treibstoffs dazu veranlasst werden, die Abgase zu einer Abgasoxidationsvorrichtung (4), die in der Abgasleitung abströmseitig des Gassensors (13) angeordnet ist, zu begleiten, um in der Treibstoffoxidationsvorrichtung oxidiert zu werden und dadurch eine Erhöhung der Temperatur der durch die Abgasoxidationsvorrichtung tretenden Abgase zu bewirken.

**3.** Verfahren nach Anspruch 2, **dadurch gekennzeichnet, dass** die Treibstoffoxidationsvorrichtung (4) die Gestalt eines Oxidationskatalysators annimmt.

**4.** Verfahren nach einem der Ansprüche 1 bis 3, bei welchem der Signalverarbeitungs-Algorithmus ein Algorithmus zur linearen Anpassung ist, der einen Verstärkungsfaktor (K) umfasst, **dadurch gekennzeichnet**

- **dass** ein Wert des Verstärkungsfaktors (K) auf der Grundlage der Werte ($S_i$, $T_i$) in den Sätzen von gemessenen Werten und gemäß Beziehungen zwischen diesen Werten, die sich aus den allgemeinen Gasgesetzen ergeben, bestimmt wird,
- und **dass** der Gassensor (13) dadurch angepasst wird, dass der Verstärkungsfaktor (K) des Signalverarbeitungs-Algorithmus dazu veranlasst wird, den bestimmten Wert anzunehmen.

**5.** Verfahren nach einem der Ansprüche 1 bis 4, **dadurch gekennzeichnet, dass** der Gassensor (13) ein Sensor ist, der die Konzentration von NO, $NO_2$, $N_2O$, $O_2$, $NH_3$ oder CO misst.

**6.** System zur Anpassung eines Gassensors (13), der in einer Abgasleitung (3) eines Verbrennungsmotors (1) angeordnet ist und der ein Messsignal erzeugt, das von einer Konzentration eines bestimmten Gases in den durch die Abgasleitung tretenden Gasen abhängt und mittels eines Signalverarbeitungs-Algorithmus in einen Wert umgewandelt wird, der die Konzentration des Gases in den Abgasen dargestellt, **dadurch gekennzeichnet, dass** das System eine elektronische Steuereinheit (12) umfasst, die dazu eingerichtet ist,

- Sätze von gemessenen Werten zu drei oder mehr unterschiedlichen Zeitpunkten während eines Zeitraums aufzunehmen, während dessen die Betriebszustände des Motors derart sind, dass die Zusammensetzung der von dem Motor (1) abgegebenen Abgase zumindest im Wesentlichen unverändert beibehalten werden, wobei jeder Satz von gemessenen Werten einen ersten Wert ($S_1$), der einer Größe des Messsignals zu dem Zeitpunkt der entsprechenden Aufnahme entspricht, und einen zweiten Wert (T1), der einer Temperatur der Abgase zu dem Zeitpunkt der entsprechenden Aufnahme in dem Teil der Abgasleitung entspricht, in welchem der Gassensor (13) angeordnet ist, umfasst,
- die Temperatur der Abgase derart zu regeln, dass deren Temperatur in dem Teil der Abgasleitung, in welchem der Gassensor (13) angeordnet ist, zu dem Zeitpunkt jeder Aufnahme während des relevanten Zeitraums verschieden ist,
- einen Wert einer oder mehrerer Konstanten, die einen Bestandteil des Signalverarbeitungs-Algorithmus darstellen, auf der Grundlage der Werte ($S_i$, $T_i$) in den Sätzen gemessener Werte und gemäß Beziehungen dieser Werte zu bestimmen, die sich aus den allgemeinen Gasgesetzen ergeben, und
- den Gassensor (13) durch Abstimmung des Signalverarbeitungs-Algorithmus gemäß des für jede Konstante bestimmten Werts anzupassen.

7. System nach Anspruch 6, **dadurch gekennzeichnet, dass** das Steuergerät dazu eingerichtet ist, die Temperatur der Abgase durch Steuerung der Menge unverbrannten Treibstoffs zu regeln, der dazu veranlasst wird, die Abgase zu einer Treibstoffoxidationsvorrichtung (4) zu begleiten, die in der Abgasleitung abströmseitig des Gassensors (13) angeordnet ist, um in der Treibstoffoxidationsvorrichtung oxidiert zu werden und dadurch eine Erhöhung der Temperatur der durch die Treibstoffoxidationsvorrichtung tretenden Abgase bewirken.

8. System nach Anspruch 6 oder 7, bei welchem der Signalverarbeitungs-Algorithmus ein Algorithmus zur linearen Anpassung ist, der einen Verstärkungsfaktor (K) umfasst, **dadurch gekennzeichnet,**

- **dass** das Steuergerät dazu eingerichtet ist, einen Wert des Verstärkungsfaktors (K) auf der Grundlage der Werte ($S_i$, $T_i$) in den Sätzen von gemessenen Werten und gemäß Beziehungen zwischen diesen Werten zu bestimmen, die sich aus den allgemeinen Gasgesetzen ergeben,
- und **dass** das Steuergerät dazu eingerichtet ist, den Gassensor (13) dadurch anzupassen, dass der Verstärkungsfaktor (K) des Signalverarbeitungs-Algorithmus dazu veranlasst wird, den bestimmten Wert anzunehmen.

9. Computerprogrammprodukt zur Anpassung eines Gassensors (13), der in einer Abgasleitung (3) eines Verbrennungsmotors (1) angeordnet ist und der ein Messsignal erzeugt, das von einer Konzentration eines bestimmten Gases in den durch die Abgasleitung tretenden Gasen abhängt und mittels eines Signalverarbeitungs-Algorithmus in einen Wert umgewandelt wird, der die Konzentration des Gases in den Abgasen darstellt, wobei das Computerprogrammprodukt einen Computerprogrammcode zur Veranlassung einer elektronischen Steuereinheit (12) dazu umfasst,

- Sätze von gemessenen Werten zu drei oder mehr unterschiedlichen Zeitpunkten während eines Zeitraums aufzunehmen, während dessen die Betriebszustände des Motors derart sind, dass die Zusammensetzung der von dem Motor (1) abgegebenen Abgase zumindest im Wesentlichen unverändert beibehalten werden, wobei jeder Satz von gemessenen Werten einen ersten Wert ($S_1$), der einer Größe des Messsignals zu dem Zeitpunkt der entsprechenden Aufnahme entspricht, und einen zweiten Wert (T1), der einer Temperatur der Abgase zu dem Zeitpunkt der entsprechenden Aufnahme in dem Teil der Abgasleitung entspricht, in welchem der Gassensor (13) angeordnet ist, umfasst,
- die Temperatur der Abgase derart zu regeln, dass deren Temperatur in dem Teil der Abgasleitung, in welchem der Gassensor (13) angeordnet ist, zu dem Zeitpunkt jeder Aufnahme während des relevanten Zeitraums verschieden ist,
- einen Wert einer oder mehrerer Konstanten, die einen Bestandteil des Signalverarbeitungs-Algorithmus darstellen, auf der Grundlage der Werte ($S_i$, $T_i$) in den Sätzen gemessener Werte und gemäß Beziehungen dieser Werte zu bestimmen, die sich aus den allgemeinen Gasgesetzen ergeben, und
- den Gassensor (13) durch Abstimmung des Signalverarbeitungs-Algorithmus gemäß des für jede Konstante bestimmten Werts anzupassen.

10. Computerprogrammprodukt nach Anspruch 9, **dadurch gekennzeichnet, dass** das Computerprogrammprodukt ein Datenspeichermedium umfasst, das von einer elektronischen Steuereinheit lesbar ist und auf welchem der Computerprogrammcode gespeichert ist.

11. Elektrische Steuereinheit für ein Kraftfahrzeug, umfassend ein Ausführungsmittel (31), einen Speicher (32), der mit dem Ausführungsmittel verbunden ist, und ein Datenspeichermedium (34), das mit dem Ausführungsmittel verbunden ist und auf welchem ein Computerprogrammcode eines Computerprogrammprodukt nach Anspruch 9 gespeichert ist.

**Revendications**

1. Procédé d'adaptation d'un capteur de gaz (13) qui est situé dans une ligne d'échappement (3) d'un moteur à combustion (1) et engendre un signal de mesure qui dépend de la concentration d'un gaz spécifique dans les gaz d'échappement passant par la ligne d'échappement et qui est converti à l'aide d'un algorithme de traitement de signal en une valeur qui représente la concentration dudit gaz dans les gaz d'échappement, **caractérisé**

   - **en ce que** des ensembles de valeurs mesurées sont enregistrés à trois ou davantage de moments pendant une période lorsque les conditions de fonctionnement du moteur (1) sont telles que la composition des gaz d'échappement envoyés par ce dernier est maintenue sensiblement inchangée, chacun desdits ensembles de valeurs mesurées comprenant une première valeur ($S_1$) correspondant à l'amplitude du signal de mesure au moment de l'enregistrement respectif et une deuxième valeur ($T_1$) correspondant à la température des gaz d'échappement au moment de l'enregistrement respectif, dans la partie de la ligne d'échappement où le capteur de gaz (13) est situé,
   - **en ce que** la température des gaz d'échappement est réglée de façon telle que leur température dans la partie de la ligne d'échappement où le capteur de gaz (13) est situé, soit différente au moment de chaque enregistrement pendant la période en question,
   - **en ce qu'**une valeur pour une ou davantage de constantes qui font partie de l'algorithme de traitement de signal, est déterminée sur la base des valeurs ($S_i$, $T_i$) dans lesdits ensembles de valeurs mesurées et en tenant compte de relations entre ces valeurs qui sont issues de la loi générale des gaz, et
   - **en ce que** le capteur de gaz (13) est adapté par un ajustement de l'algorithme de traitement de signal selon la valeur déterminée pour chaque constante.

2. Procédé selon la revendication 1, **caractérisé en ce que** le réglage de la température est effectué par différentes quantités de carburant non brûlé que l'on fait accompagner les gaz d'échappement jusqu'à un dispositif d'oxydation de carburant (4) situé dans la ligne d'échappement en amont du capteur de gaz (13), afin d'être oxydé dans le dispositif d'oxydation de carburant et de créer par cela une augmentation de la température des gaz d'échappement passant par le dispositif d'oxydation de carburant.

3. Procédé selon la revendication 2, **caractérisé en ce que** le dispositif d'oxydation de carburant (4) présente la forme d'un catalyseur d'oxydation.

4. Procédé selon l'une des revendications 1 à 3, dans lequel l'algorithme de traitement de signal est un algorithme pour adaptation linéaire qui a un coefficient d'amplification (K), **caractérisé en ce qu'**une valeur pour le coefficient d'amplification (K) est déterminé sur la base des valeurs ($S_i$, $T_i$) dans lesdits ensembles de valeurs mesurées et en tenant compte de relations entre ces valeurs qui sont issues de la loi générale des gaz et **en ce que** le capteur de gaz (13) est adapté par le coefficient d'amplification (K) de l'algorithme de traitement de signal qui est fait prendre la valeur déterminée.

5. Procédé selon l'une des revendications 1 à 4, **caractérisé en ce que** le capteur de gaz (13) est un capteur qui mesure la concentration de NO, $NO_2$, $N_2O$, $O_2$, $NH_3$ ou CO.

6. Système pour l'adaptation d'un capteur de gaz (13) qui est situé dans une ligne d'échappement (3) d'un moteur à combustion (1) et engendre un signal de mesure qui dépend de la concentration d'un gaz spécifique dans les gaz d'échappement passant par la ligne d'échappement et qui est converti à l'aide d'un algorithme de traitement de signal en une valeur qui représente la concentration dudit gaz dans les gaz d'échappement, **caractérisé en ce que** le système comprend un dispositif de commande électronique (12) qui est configuré

   - pour enregistrer des ensembles de valeurs enregistrés à trois ou davantage de moments pendant une période lorsque les conditions de fonctionnement du moteur (1) sont telles que la composition des gaz d'échappement envoyés par ce dernier est maintenue sensiblement inchangée, chacun desdits ensembles de valeurs mesurées comprenant une première valeur ($S_1$) correspondant à l'amplitude du signal de mesure au moment de l'enregistrement respectif et une deuxième valeur ($T_1$) correspondant à la température des gaz d'échappement au moment de l'enregistrement respectif, dans la partie de la ligne d'échappement où le capteur de gaz (13) est situé,
- pour régler la température des gaz d'échappement de façon telle que leur température dans la partie de la ligne d'échappement où le capteur de gaz (13) est situé, soit différente au moment de chaque enregistrement pendant la période en question,
- pour déterminer une valeur pour une ou davantage de constantes qui font partie de l'algorithme de traitement de signal, sur la base des valeurs ($S_i$, $T_i$) dans lesdits ensembles de valeurs mesurées et en tenant compte de relations entre ces valeurs qui sont issues de la loi générale des gaz, et
- pour adapter le capteur de gaz (13) par un ajustement de l'algorithme de traitement de signal selon la valeur déterminée pour chaque constante.

7. Système selon la revendication 6, **caractérisé en ce que** le dispositif de commande (12) est configuré pour régler la température des gaz d'échappement en réglant la quantité de carburant non brûlé que l'on fait accompagner les gaz d'échappement jusqu'à un dispositif d'oxydation de carburant (4) situé dans la ligne d'échappement en amont du capteur de gaz (13), afin d'être oxydé dans le dispositif d'oxydation de carburant et de créer par cela une augmentation de la température des gaz d'échappement passant par le dispositif d'oxydation de carburant.

8. Système selon la revendication 6 ou 7, dans lequel l'algorithme de traitement de signal est un algorithme pour adaptation linéaire qui a un coefficient d'amplification (K),
**caractérisé**

- **en ce que** le dispositif de commande (12) est configuré pour déterminer une valeur pour le coefficient d'amplification (K) sur la base des valeurs ($S_i$, $T_i$) dans lesdits ensembles de valeurs mesurées et en tenant compte de relations entre ces valeurs qui sont issues de la loi générale des gaz et
- **en ce que** le dispositif de commande (12) est configuré pour adapter le capteur de gaz (13) par le coefficient d'amplification (K) de l'algorithme de traitement de signal qui est fait prendre la valeur déterminée.

9. Programme d'ordinateur en tant que produit pour l'adaptation d'un capteur de gaz (13) qui est situé dans une ligne d'échappement (3) d'un moteur à combustion (1) et engendre un signal de mesure qui dépend de la concentration d'un gaz spécifique dans les gaz d'échappement passant par la ligne d'échappement et qui est converti à l'aide d'un algorithme de traitement de signal en une valeur qui représente la concentration dudit gaz dans les gaz d'échappement, lequel produit à programme d'ordinateur comprend un code de programme d'ordinateur pour faire un dispositif de commande électronique (12)

- enregistrer des ensembles de valeurs enregistrés à trois ou davantage de moments pendant une période lorsque les conditions de fonctionnement du moteur (1) sont telles que la composition des gaz d'échappement envoyés par ce dernier est maintenue sensiblement inchangée, chacun desdits ensembles de valeurs mesurées comprenant une première valeur ($S_1$) correspondant à l'amplitude du signal de mesure au moment de chaque enregistrement et une deuxième valeur ($T_1$) correspondant à la température des gaz d'échappement au moment de l'enregistrement respectif, dans la partie de la ligne d'échappement où le capteur de gaz (13) est situé,
- régler la température des gaz d'échappement de façon telle que leur température dans la partie de la ligne d'échappement où le capteur de gaz (13) est situé, soit différente au moment de chaque enregistrement pendant la période en question,
- déterminer une valeur pour une ou davantage de constantes qui font partie de l'algorithme de traitement de signal, sur la base des valeurs ($S_i$, $T_i$) dans lesdits ensembles de valeurs mesurées et en tenant compte de relations entre ces valeurs qui sont issues de la loi générale des gaz, et
- adapter le capteur de gaz (13) par un ajustement de l'algorithme de traitement de signal selon la valeur déterminée pour chaque constante.

10. Programme d'ordinateur en tant que produit selon la revendication 9, **caractérisé en ce que** le produit à programme d'ordinateur comprend un moyen de stockage de données qui peut être lu par une unité de commande électronique et qui a le code de programme d'ordinateur enregistré sur lui.

11. Unité de commande électronique pour un véhicule à moteur comprenant des moyens de mise en oeuvre (31), une mémoire (32) connectée aux moyens de mise en oeuvre et des moyens de stockage de données (34) qui sont connectés aux moyens de mise en oeuvre et qui a, enregistré sur lui, le code de programme d'ordinateur d'un programme d'ordinateur en tant que produit selon la revendication 9.

Fig 1

Fig 2

| Records sets of measured values | ∼S1 |
| Determine values for constants | ∼S2 |
| Adapts sensor | ∼S3 |

Fig 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   DE 102007045080 A1